# EUROPÄISCHE PATENTANMELDUNG

(11) **EP 4 556 262 A1**
(43) Veröffentlichungstag der Anmeldung: **21.05.2025**
(21) Anmeldenummer: 23210879.5
(22) Anmeldetag: 20.11.2023
(51) Int. Cl.: B60C 23/04, G01L 17/00

(54) **SENSORBESTÜCKTER FAHRZEUGREIFEN**

(71) Anmelder: Continental Reifen Deutschland GmbH, 30175 Hannover (DE)
(72) Erfinder: Nettelmann, Marc, 30165 Hannover (DE); Mohan, Vipin, 30165 Hannover (DE); Jaedicke, Jessica, 30165 Hannover (DE); Groffmann, Lena, 30165 Hannover (DE); Sahlmüller, Baldo, 30165 Hannover (DE); James, Akhil, 30165 Hannover (DE); Lehmann, Jörg, 30165 Hannover (DE); Sá, João, 30165 Hannover (DE)
(74) Vertreter: Continental Corporation

(57) **Zusammenfassung**

Die Erfindung betrifft einen Fahrzeugreifen (10) mit einem Sensorsystem (12), wobei das Sensorsystem (12) umfasst: i) eine elektronische Sensoreinheit (14) zur Detektion einer vom Fahrzeugreifen (10) erfahrenen mechanischen Schlagbelastung, ii) eine elektronische Kommunikationseinheit (16), zum Senden von Signalen in einem drahtlosen Übertragungsverfahren, und iii) eine elektronische Steuerungseinheit (18) zur Steuerung des Sensorsystems (12), wobei die elektronische Steuerungseinheit (18) dazu eingerichtet ist mit der elektronischen Kommunikationseinheit (16) ein Identifikationssignal zu senden, wenn die Sensoreinheit (14) eine mechanische Schlagbelastung registriert, welche der Fahrzeugreifen (10) erfährt.

## Beschreibung

Die Erfindung betrifft einen Fahrzeugreifen mit Sensorsystem und ein Verfahren zur Erfassung eines Reifensensorsignals des Sensorsystems eines solchen Fahrzeugreifens.

Die fortschreitende technische Entwicklung und die zunehmende Digitalisierung betreffen insbesondere auch den Bereich der Fahrzeugtechnik und der Fahrzeugreifen. Es besteht ein fortgesetztes Interesse daran, bei den in Fahrzeugen eingesetzten Komponenten fortlaufend Leistungsdaten zu erfassen, um beispielsweise die Leistungsfähigkeit und Betriebssicherheit kontinuierlich zu überwachen. Zu den Informationen, die bei Fahrzeugreifen überwacht werden können, gehören beispielsweise der Reifendruck und die Reifentemperatur. Entsprechende Systeme sind dem Fachmann bekannt.

In der Praxis müssen die von in Fahrzeugreifen angeordneten Sensoren gesammelten Informationen jedoch nicht nur erfasst und ausgewertet werden, sondern diese Informationen müssen zudem den jeweiligen Fahrzeugreifen in der Reifenanordnung des Fahrzeuges bzw. sogar den jeweiligen Fahrzeugen der Fahrzeugflotte zugeordnet werden.

Die vorstehend beschriebene Notwendigkeit, die von Sensoren erfassten Reifeninformationen den Fahrzeugreifen eines Fahrzeuges zuzuordnen, setzt die fehlerfrei Identifikation des vom Reifen gesendeten Identifikationssignals zwischen einer potentiellen Vielzahl an anderen Signalen voraus und ist bereits für ein isoliertes Fahrzeugsystem nicht trivial, insbesondere nicht, wenn diese über Achsen mit Zwillingsbereifung verfügt, in welchem die Reifen räumlich sehr nah beieinander angeordnet sind. Die dabei auftretenden Herausforderungen werden jedoch noch verstärkt, wenn im Rahmen eines Flottenmanagements, beispielsweise für eine Nutzfahrzeugflotte, für eine Vielzahl von Fahrzeugen nachgehalten werden soll, welche Sensoren sich in welchen Fahrzeugreifen befinden, um deren Sensordaten den Fahrzeugreifen und den entsprechenden Fahrzeugen zuzuordnen, insbesondere wenn die Fahrzeuge relativ nah nebeneinander stehen.

Die entsprechenden Informationen Reifen-spezifisch abrufen zu können ist dabei für den Betreiber der Fahrzeugflotte wichtig, beispielsweise um zum Zwecke der Treibstoffeinsparung optimale Reifendrücke in den Flottenfahrzeugen sicherzustellen und eine effiziente Instandhaltung zu gewährleisten. Für den Flottenbetreiber ist es beispielsweise wünschenswert, jederzeit erfassen zu können, wie sich der Reifendruck der von ihm verwalteten Fahrzeuge verändert, sodass er beispielsweise sich andeutende Defekte frühzeitig erkennen kann, um gezielte Reparaturbeziehungsweise Wartungsarbeiten an dem betroffenen Fahrzeug veranlassen zu können, ohne dass die Notwendigkeit einer regelmäßigen manuellen Inspektion sämtlicher Fahrzeugreifen sämtlicher Fahrzeuge der Fahrzeugflotte notwendig ist.

Im Stand der Technik wurden zur Lösung der bestehenden Probleme eine Vielzahl an unterschiedlichen Lösungen vorgeschlagen, welche die Identifikation von Fahrzeugreifen beziehungsweise den in den Fahrzeugreifen verbauten Sensoreinheiten und die Zuordnung im "Backend" (sogenanntes "teach-in") auf verschiedenen Wegen ermöglichen, beispielsweise durch eine möglichst genaue Positionsbestimmung, beispielsweise durch Triangulationsverfahren. Viele der aus dem Stand der Technik bekannten Verfahren sind jedoch nach Einschätzung der Erfinder hinsichtlich unterschiedlichster Aspekte nachteilig und in vielen Fällen für die praktische Umsetzung des "Teach in", d.h. der Einbindung der entsprechenden Fahrzeugreifen beziehungsweise Sensoreinheiten in das Flottenmanagementsystem, nicht problemlos geeignet. Insbesondere erfordern viele der aus dem Stand der Technik bekannten Verfahren den Einsatz relativ aufwändiger zusätzlicher Vorrichtungen oder erfordern zur zuverlässigen Zuordnung einen vergleichsweise hohen Rechenaufwand.

Die primäre Aufgabe der vorliegenden Erfindung war es, die Nachteile des Standes der Technik auszuräumen oder zumindest zu verringern.

Insbesondere war es die Aufgabe der vorliegenden Erfindung, einen vorteilhaften Fahrzeugreifen bereitzustellen, dessen Sensoreinheit in besonders zuverlässiger sowie einfacher Art und Weise im Rahmen eines "Teach-in" identifiziert und einem Fahrzeug zugewiesen werden kann und ein entsprechendes Verfahren zur Zuordnung der Fahrzeugreifen unter Erfassung eines Reifensensorsignals anzugeben.

Hierbei war es eine Aufgabe der vorliegenden Erfindung, dass die Identifikation und Zuordnung der Fahrzeugreifen auch dann besonders leicht und zuverlässig möglich sein sollte, wenn diese neben einer Vielzahl von weiteren Fahrzeugreifen vorliegen, welche ebenfalls über Sensoreinheiten verfügen und entsprechend Signale aussenden können. Hierbei war es besonders wünschenswert, dass die anzugebenden Fahrzeugreifen und das damit ausführbare Verfahren insbesondere auch die zuverlässige Identifikation und ein leichtes "Teach-in" für Fahrzeugreifen ermöglichen sollten, welche auf einer Fahrzeugachse mit Zwillingsbereifung vorliegen.

Es war eine weitere Aufgabe der vorliegenden Erfindung, dass zur zuverlässigen Identifikation der anzugebenden Fahrzeugreifen und zur Durchführung des anzugebenden Verfahrens möglichst keine aufwändigen Vorrichtungen benötigt werden, insbesondere keine triangulations-fähige Empfängeranordnung, wobei es anstrebenswert war, insbesondere auch den rechnerischen Aufwand zur Identifikation der vom zu identifizierenden Fahrzeugreifen ausgesendeten Signale zwischen den Signalen weiterer Fahrzeugreifen möglichst zu minimieren.

Die Erfinder der vorliegenden Erfindung haben nunmehr gefunden, dass sich die vorstehenden Aufgabe überraschenderweise lösen lassen, wenn im Rahmen der Identifikation und Zuordnung von Fahrzeugreifen über die Erfassung von deren Reifensensorsignalen die Funktionalität der in den Fahrzeugreifen verbauten Sensoreinheiten in synergistischer Weise ausgenutzt wird, um ein auf den Fahrzeugreifen einwirkendes Anregungssignal in Form einer mechanischen Schlagbelastung zu detektieren und die Fahrzeugreifen beziehungsweise die darin verbauten Sensorsysteme so auszulegen, dass diese infolge einer detektierten Schlagbelastung ein Identifikationssignal aussenden, wie es in den Ansprüchen definiert ist. Dieses Identifikationssignal kann in vorteilhafter Weise für das gewünschte "Teach-in" verwendet werden und ermöglicht in Folge der selektiven Anregung eine zuverlässige Identifikation des zwischen einer Vielzahl von anderen Fahrzeugreifen ermöglicht, welche infolge einer ausbleibenden Schlagbelastung kein vergleichbares Identifikationssignal aussenden.

Durch diese Konzeption der Fahrzeugreifen kann die Erfassung des von den anzugebenden Fahrzeugreifen ausgesendeten Reifensensorsignals und damit die zweifelsfreie Zuordnung des Fahrzeugreifens zu einem Fahrzeug beziehungsweise sogar einer Reifenposition in vorteilhafter Weise dadurch ausgeführt werden, dass beispielsweise der Flottenmanager mit seinem empfangsbereiten Erfassungsgerät von Reifen zu Reifen geht und jedem Reifen, beispielsweise mit einem Hammer oder einem ähnlichen einfachen Werkzeug, einen Schlag versetzt, woraufhin die so angeregten Reifen das zur Zuordnung gewünschte Signal senden.

Das erhaltene Verfahren ist sehr zeit- und kosteneffizient durchzuführen, erlaubt eine sehr zuverlässige Zuordnung, benötigt relativ wenig Rechenkapazität in seiner Umsetzung, kann mit sehr einfachen Erfassungsgeräten in Kombination mit einfachsten Schlagwerkzeugen betrieben werden und stellt sehr niedrige Anforderungen an den Ausbildungsgrad der eingesetzten Arbeitskräfte, woraus eine vorteilhaft niedrige Fehleranfälligkeit und ein hohe Prozesssicherheit resultieren.

Nach Einschätzung der Erfinder ist das Verfahren dabei insbesondere auch deshalb vorteilhaft, weil die mit dem "Teach-in" befassten Arbeitskräfte häufig ohnehin Schlagwerkzeuge mit sich führen, wobei diese im Stand der Technik zumeist dafür eingesetzt werden, mit einem Schlag auf den Fahrzeugreifen dessen Druckzustand qualitativ zu bewerten, ohne hierfür eine exakte Messung vornehmen zu müssen.

Die vorstehend genannten Aufgaben werden durch den Gegenstand der Erfindung gelöst, wie er in den Ansprüchen definiert ist. Bevorzugte erfindungsgemäße Ausgestaltungen ergeben sich aus den Unteransprüchen und den nachfolgenden Ausführungen.

Solche Ausführungsformen, die nachfolgend als bevorzugt bezeichnet sind, werden in besonders bevorzugten Ausführungsformen mit Merkmalen anderer als bevorzugt bezeichneter Ausführungsformen kombiniert. Ganz besonders bevorzugt sind somit Kombinationen von zwei oder mehr der nachfolgend als besonders bevorzugt bezeichneten Ausführungsformen. Ebenfalls bevorzugt sind Ausführungsformen, in denen ein in irgendeinem Ausmaß als bevorzugt bezeichnetes Merkmal einer Ausführungsform mit einem oder mehreren weiteren Merkmalen anderer Ausführungsformen kombiniert wird, die in irgendeinem Ausmaß als bevorzugt bezeichnet werden. Merkmale bevorzugter Verfahren und Erfassungsvorrichtungen ergeben sich aus den Merkmalen bevorzugter Fahrzeugreifen.

Die Erfindung betrifft insbesondere einen Fahrzeugreifen mit einem Sensorsystem, wobei das Sensorsystem umfasst:
i) eine elektronische Sensoreinheit zur Detektion einer vom Fahrzeugreifen erfahrenen mechanischen Schlagbelastung,
ii) eine elektronische Kommunikationseinheit, zum Senden von Signalen in einem drahtlosen Übertragungsverfahren, und
iii) eine elektronische Steuerungseinheit zur Steuerung des Sensorsystems,
wobei die elektronische Steuerungseinheit dazu eingerichtet ist mit der elektronischen Kommunikationseinheit ein Identifikationssignal zu senden, wenn die Sensoreinheit eine mechanische Schlagbelastung registriert, welche der Fahrzeugreifen erfährt.

Die Erfindung betrifft ein gleicher Weise ein Verfahren zur Erfassung eines Reifensensorsignals eines Sensorsystems in einem Fahrzeugreifen, insbesondere zum Zwecke der Zuordnung des Fahrzeugreifens an ein Fahrzeug oder eine Reifenposition, insbesondere im Rahmen eines sogenannten "Teach-in", als auch einen spezifischen Fahrzeugreifen, der hinsichtlich seiner Ausgestaltung und Auslegung für den Einsatz in diesem Verfahren konzipiert ist. Mit Blick auf ein möglichst einfaches Verständnis der vorliegenden Erfindung ist es dabei zielführend, mit der Erläuterung des Fahrzeugreifens zu beginnen.

Fahrzeugreifen sind dem Fachmann aus dem Stand der Technik umfassen bekannt. Es kann als Vorteil dieser Erfindung gesehen werden, dass das erfinderische Konzept prinzipiell auf eine breite Palette von Fahrzeugreifen anwendbar ist, wobei sich eine besondere Eignung für Fahrzeugluftreifen ergibt, welche in vielen Fällen bereits Sensorsysteme umfassen, welche vom Fachmann durch geeignete Programmierung auf die Umsetzung der vorliegenden Erfindung adaptiert werden können. Beispielhaft ist ein erfindungsgemäßer Fahrzeugreifen, wobei der Fahrzeugreifen ein PKW- oder LKW-Reifen, bevorzugt ein LKW-Reifen ist.

Bevorzugt ist dabei ein erfindungsgemäßer Fahrzeugreifen, wobei der Fahrzeugreifen ein Fahrzeugluftreifen ist, wobei das Sensorsystem bevorzugt an der Reifeninnenschicht des Fahrzeugluftreifen angeordnet ist, besonders bevorzugt im Seitenwandbereich oder in radialer Richtung unterhalb des Laufstreifens.

Im Rahmen der vorliegenden Erfindung wird eine etwaige vorliegende Reifenfelge dem Fahrzeugreifen zugeordnet. Dies ist zweckmäßig, da in Übereinstimmung mit dem fachmännischen Verständnis einige elektronische Sensoreinheiten, welche der Detektion einer mechanischen Schlagbelastung dienen können, insbesondere Drucksensoren, prinzipiell auch auf der Felge des Fahrzeugreifens angebracht werden können, ohne die Funktionalität der erfindungsgemäßen Fahrzeugreifen und die Durchführbarkeit des erfindungsgemäßen Verfahrens zu beeinträchtigen. Denkbar ist somit auch ein erfindungsgemäßer Fahrzeugreifen, wobei der Fahrzeugreifen eine Felge umfasst.

Der Fahrzeugreifen umfasst ein Sensorsystem, welches wiederum zumindest drei Einheiten umfasst oder aus diesen besteht. Dieses Sensorsystem ist in Übereinstimmung mit dem fachmännischen Verständnis dazu geeignet, ein oder mehrere für den Reifen relevante Einflussgrößen zu bestimmen und diese in einem drahtlosen Übertragungsverfahren an einen außerhalb des Reifens befindlichen Empfänger zu übermitteln. Im Stand der Technik sind Sensorsysteme bekannt, welche insbesondere Informationen über den Reifendruck übermitteln, wobei entsprechende Systeme auch als TPMS bezeichnet werden. Die wesentliche Funktionalität der Sensorsysteme wird durch eine elektronische Sensoreinheit geleistet.

Die vorstehende Definition der Sensoreinheit bedeutet, dass zumindest eine der im Sensorsystem vorliegenden elektronischen Sensoreinheiten eine Sensoreinheit ist, die detektieren kann, wenn der Fahrzeugreifen eine mechanische Schlagbelastung erfährt, beispielsweise einen Schlag mit einem Hammer. Mit anderen Worten handelt es sich um einen erfindungsgemäßen Fahrzeugreifen, wobei die Sensoreinheit die mechanische Schlagbelastung anhand einer Änderung des detektierten Sensorwerts registriert, bevorzugt durch eine Beschleunigungsänderung oder der Reifendruckänderung, besonders bevorzugt eine Beschleunigungsänderung.

Es kann als Vorteil der vorliegenden Erfindung gesehen werden, dass eine breite Anzahl an Sensoreinheiten dazu in der Lage ist, in den von ihnen detektierten Sensorwerten das Auftreten einer mechanischen Schlagbelastung zu registrieren. In der Praxis äußert sich eine Schlagbelastung nämlich unabhängig von dem zur Identifikation detektierten Sensorwert regelmäßig durch ein zeitlich stark begrenztes, diskretes Signal, dessen Intensität, beispielsweise hinsichtlich der absoluten Druckänderung und/oder gemessenen Beschleunigung, unter Abschätzung der in der Praxis bei einer manuellen Schlagbelastung relevanten wirkenden Kräfte relativ gut eingegrenzt werden kann.

Für die Detektion der mechanischen Schlagbelastung schlagen die Erfinder vor, dass vorgegebene Kriterien aufgestellt werden können, anhand derer das Sensorsystem, beziehungsweise dessen elektronische Steuerungseinheit erkennt, dass eine mechanische Schlagbelastung vorliegt, wobei sowohl die absolute als auch die relative Änderung betrachtet werden kann, was nach Einschätzung der Erfinder vor allem von der Art der konkret verwendeten Sensoreinheit abhängt. In jedem Fall schlagen die Erfinder vor, dass zweckmäßigerweise eine Mindestintensität der Änderung vorgegeben werden kann, um zu verhindern, dass zu schwache Schlagbelastungen dazu führen, dass der Fahrzeugreifen zu häufig Identifikationssignale sendet, selbst wenn es nicht gewünscht ist. Bevorzugt ist ein erfindungsgemäßer Fahrzeugreifen, wobei die Sensoreinheit die mechanische Schlagbelastung dadurch registriert, dass der detektierte Sensorwert ein oder mehrere vorgegebene Kriterien erfüllt. Besonders bevorzugt ist ein erfindungsgemäßer Fahrzeugreifen, wobei das vorgegebenen Kriterien bevorzugt die Feststellung umfasst, dass die Änderung des Sensorwerts in einem vorgegebenen Detektionsintervall nach Durlaufen eines Maximums auf einen Wert zurückfällt, der sich um 10 % oder weniger, bevorzugt 5 % oder weniger, besonders bevorzugt 1 % oder weniger, ganz besonders bevorzugt im Wesentlichen gar nicht, von dem Ausgangswert am Anfang des Detektionsintervalls unterscheidet. Bevorzugt ist zusätzlich oder alternativ auch ein erfindungsgemäßer Fahrzeugreifen, wobei das vorgegebenen Kriterien bevorzugt die Feststellung umfasst, dass die absolute oder relative, bevorzugt die absolute, Änderung des Sensorwerts in einem vorgegebenen Detektionsintervall eine Auslösewert überschreitet und/oder in einem Auslösebereich liegt, bevorzugt in einem Auslösebereich liegt.

Je nach Art der eingesetzten Sensoreinheit kann auch der Fahrbetrieb des Fahrzeuges prinzipiell ein Sensorsignal erzeugen, welches, beispielsweise durch Einstellung entsprechender Grenz- und Höchstwerte, nur schlecht von einer mechanischen Schlagbelastung unterschieden werden kann, welche im erfindungsgemäßen Verfahren das Aussenden des Identifikationssignals bedingen soll. Die Erfinder schlagen jedoch vor, dass insoweit auf den Umstand zurückgegriffen werden kann, dass das gewünschte "Teach-in" von Fahrzeugreifen regelmäßig nicht bei voller Fahrt passiert. Wenn nicht ohnehin die noch nicht montierten Fahrzeugreifen ins System eingepflegt werden sollen, wird das "Teach-in" für am Fahrzeug befestigte Reifen nahezu immer beim Stillstand des Fahrzeuges beziehungsweise bestenfalls bei sehr niedrigen Geschwindigkeiten, beispielsweise einem leichten Rollen, erfolgen. Entsprechend schlagen die Erfinder vor, dass das Sensorsystem beziehungsweise die elektronische Steuerungseinheit so ausgelegt werden können, dass die Aussendung des Identifikationssignals neben der Detektion der mechanischen Schlagbelastung auch noch an ein weiteres Kriterium gekoppelt wird, an welchem sich festmachen lässt, dass das Fahrzeug möglichst weitgehend steht. Bevorzugt ist vor diesem Hintergrund zusätzlich oder alternativ ein erfindungsgemäßer Fahrzeugreifen, wobei das vorgegebenen Kriterium bevorzugt die Feststellung umfasst, dass der Absolutwert der detektierten Beschleunigung unterhalb eines vorgegebenen Höchstwertes liegt, und/oder wobei die elektronische Steuerungseinheit dazu eingerichtet ist, das Identifikationssignal nur zu senden, wenn die von der Sensoreinheit detektierte Beschleunigung, bevorzug die Radialbeschleunigung, unterhalb eines vorgegebenen Höchstwertes liegt, und/oder wobei die elektronische Steuerungseinheit dazu eingerichtet ist, das Identifikationssignal nur zu senden, wenn die Rotationsgeschwindigkeit und/oder die Drehzahl des Fahrzeugreifens unterhalb eines vorbestimmten Höchstwertes liegt, wobei die elektronische Steuerungseinheit bevorzugt dazu eingerichtet ist, das Identifikationssignal nur zu senden, wenn die der Fahrzeugreifen nicht rotiert.

Nach Einschätzung der Erfinder eignen sich verschiedene elektronische Sensoreinheiten zur Detektion einer Schlagbelastung, wobei insbesondere die Detektion von Vibrationen, Deformationen oder sogar Geräuschen im Inneren des Fahrzeugreifens infrage kommen. Nach Einschätzung der Erfinder eignen sich jedoch insbesondere Reifendruck- und Beschleunigungssensoren für den Einsatz im Rahmen der Erfindung. Sowohl der Reifendruck im Inneren des Fahrzeugreifens als auch die Beschleunigung, welche eine am Fahrzeugreifen befestigte Sensoreinheit im Zuge eines Schlages erfährt, sind nach Einschätzung der Erfinder in vorteilhafter Weise sehr sensibel für die durch den mechanischen Schlag induzierten Veränderungen und sind entsprechend ausgezeichnet als Trigger für die Aussendung des Identifikationssignals geeignet. Als weiterer Vorteil kommt dabei hinzu, dass viele der im Stand der Technik bekannten Sensorsysteme zumindest einen Reifendruck und/oder einen Beschleunigungssensor umfassen, sodass entsprechende Ausgangssensorsysteme, welche durch eine geeignete Programmierung auf erfindungsgemäße Fahrzeugreifen abgestimmt werden müssen, als Ausgangskomponente verfügbar sind und somit in einigen Fällen auch die nachträgliche Nachrüstung bereits bestehender Fahrzeugreifen durch das Aufspielen einer geeigneten Programmierung für die elektronische Steuereinheit und damit die nachträgliche Herstellung erfindungsgemäßer Fahrzeugreifen möglich wird. In den Versuchen der Erfinder hat sich gezeigt, dass Änderungen in der von der Sensoreinheit erfahrenen Beschleunigung insgesamt noch besser geeignet sind als Auslösebedingung zu fungieren als Änderungen im Reifendruck, sodass der Einsatz entsprechender Sensoren besonders bevorzugt ist. Bevorzugt ist somit ein erfindungsgemäßer Fahrzeugreifen, wobei die Sensoreinheit eine Sensoreinheit zur Detektion einer vom Fahrzeugreifen erfahrenen mechanischen Schlagbelastung über einen von der Sensoreinheit detektierten Sensorwert ist, wobei der Sensorwert ausgewählt ist aus der Gruppe bestehend aus Vibrationen des Fahrzeugreifens, Deformation des Fahrzeugreifen, Geräuschen im Inneren des Fahrzeugreifens, Reifendruck im Inneren des Fahrzeugreifens und der von der Sensoreinheit erfahrenen Beschleunigung, bevorzugt ausgewählt ist aus der Gruppe bestehend aus dem Reifendruck im Inneren des Fahrzeugreifens und der von der Sensoreinheit erfahrenen Beschleunigung. Bevorzugt ist zusätzlich oder alternativ ein erfindungsgemäßer Fahrzeugreifen, wobei die Sensoreinheit eine Sensoreinheit zur Detektion der Beschleunigung oder des Reifendrucks, bevorzugt zur Detektion der Beschleunigung, ist.

Bevorzugt ist entsprechend ein erfindungsgemäßer Fahrzeugreifen, wobei die Sensoreinheit ausgewählt ist aus der Gruppe bestehend aus Drucksensoren, Vibrationssensoren, Mikrofonen, Deformationssensoren und Beschleunigungssensor, bevorzugt ausgewählt ist aus der Gruppe bestehend aus Drucksensoren und Beschleunigungssensor, besonders bevorzugt Beschleunigungssensoren. Besonders bevorzugt ist dabei ein erfindungsgemäßer Fahrzeugreifen, wobei die Sensoreinheit einen Beschleunigungssensor umfasst.

Die elektronische Sensoreinheit des erfindungsgemäßen Fahrzeugreifens kann neben den Sensoreinheiten, welche der Detektion der mechanischen Schlagbelastung dienen, auch noch weitere Sensoren umfassen, wobei es insbesondere nicht erforderlich ist, dass sämtliche elektronischen Sensoreinheiten, welche theoretisch zur Detektion einer vom Fahrzeugreifen erfahrenen mechanischen Schlagbelastung geeignet wären, auch zu diesem Zweck genutzt werden. Bevorzugt ist für manche Answendungen ein erfindungsgemäßer Fahrzeugreifen, wobei die Sensoreinheit ein oder mehrere weitere Sensoren umfasst, bevorzugt Temperatursensoren.

Das erfindungsgemäß einzusetzende Sensorsystem umfasst eine elektronische Kommunikationseinheit, mit welcher die Signale an einen außerhalb des Fahrzeugreifens befindlichen Empfänger übermittelt werden können, wobei es für die überwiegende Zahl der Fälle bevorzugt ist, wenn die Kommunikationseinheit auch eine Empfangsfunktion hat, sodass beispielsweise nachträglich die Programmierung des Sensorsystems angepasst werden kann. Bevorzugt ist somit ein erfindungsgemäßer Fahrzeugreifen, wobei die elektronische Kommunikationseinheit dazu eingerichtet ist, Signale in einem drahtlosen Übertragungsverfahren zu senden und zu empfangen. Bevorzugt ist zusätzlich oder alternativ ein erfindungsgemäßer Fahrzeugreifen, wobei das drahtlose Übertragungsverfahren ein Funkverfahren ist, bevorzugt ein Hochfrequenz-Funkverfahren.

Ein wichtiger Bestandteil des erfindungsgemäß einzusetzenden Sensorsystems ist die elektronische Steuerungseinheit, da diese der Steuerung des Sensorsystems dient. Insoweit kommt der Steuerungseinheit auch die Aufgabe zu, durch ihre spezifische Einrichtung zu diesem Zweck die gewünschte Funktionalität des Fahrzeugreifens zu gewährleisten. Die hierfür notwendige Einrichtung kann beispielsweise durch eine geeignete Software umgesetzt werden, wobei der Fachmann die notwendige Programmierung des Sensorsystems im Lichte der vorliegenden Offenbarung auch bereits mit lediglich grundlegenden Programmierkenntnissen umsetzen können dürfte. Bei der elektronischen Steuerungseinheit kann es sich prinzipiell um jede Art von elektronischer Steuerungseinheit handeln, wie sie in vielen Ausgestaltungen kommerziell erhältlich sind. Es kann dabei als Vorteil gesehen werden, dass viele der im Handel verfügbaren Sensorsysteme für Fahrzeugreifen neben den elektronischen Sensoreinheiten und den entsprechenden Sendern auch grundlegende elektronische Steuerungseinheiten umfassen, welche bedarfsgerecht programmiert werden können.

Im Rahmen der vorliegenden Erfindung ist die elektronische Steuerungseinheit dazu eingerichtet, in dem Fall, in dem das Sensorsystem über die elektronische Sensoreinheit eine mechanische Schlagbelastung auf dem Fahrzeugreifen detektiert, über die elektronische Kommunikationseinheit ein Identifikationssignal zu senden. Der Ausdruck "Identifikationssignal" umfasst dabei im Rahmen der vorliegenden Erfindung prinzipiell jede Art von Signal, welches sich von dem Signal unterscheidet, welches die elektronischen Sensoreinheiten im normalen Betrieb aussenden würden, insbesondere von dem zur Übermittlung der von ihnen detektierten Sensorwerte verwendeten Signal. Diese Veränderung gegenüber dem üblichen Signal, welche eine Identifikation ermöglicht, kann dabei sowohl hinsichtlich der Signaleigenschaften als auch des Signalinhaltes erfolgen. Beispielsweise wäre es theoretisch denkbar, dass das Informationssignal mit einer anderen Frequenz, in einem anderen Sendeschema oder mit einer anderen Intensität gesendet wird, um darüber identifizierbar zu werden. Zusätzlich oder alternativ kann jedoch auch eine inhaltliche Identifikation erfolgen, beispielsweise indem das Signal eine - zumindest bezogen auf das vorliegende Reifenmanagementsystem - einzigartige Identifikation ("unique ID") sendet. Der Fachmann stimmt die Eigenschaften des Informationssignals, die er bei der Umsetzung seines spezifischen Systems benötigt, um einen erfindungsgemäßen Fahrzeugreifen anhand des Identifikationssignals zwischen mehreren Fahrzeugreifen zu identifizieren, dabei im Lichte der vorliegenden Offenbarung zwanglos auf die Signaleigenschaften der ansonsten von den Sensorsystemen gesendeten Signale sowie auf die Detektionsfähigkeiten des von ihm verwendeten Erfassungsgerätes ab. Mit anderen Worten handelt es sich um einen erfindungsgemäßen Fahrzeugreifen, wobei das Identifikationssignal Informationen umfasst, anhand derer das Sensorsystem bzw. der Fahrzeugreifen identifiziert werden kann, bevorzugt eine bezogen auf eine Vielzahl von Fahrzeugreifen in einem Überwachungssystem einzigartige Identifikation.

In den Experimenten der Erfinder hat sich eine gewisse Problematik daraus ergeben, dass einige der im Fahrzeugreifen eingesetzten Sensoreinheiten, welche theoretisch für die Detektion einer Schlagbelastung geeignet wären, in der Praxis dadurch Einschränkungen unterliegen, dass diese eine sehr niedrige Messfrequenz aufweisen. Solche Sensoreinheiten ermitteln in Fahrzeugreifen häufig Zustandsparameter, bei denen es für den Fahrzeugführer beziehungsweise das Flottenmanagement ausreichend ist, lediglich von Zeit zu Zeit einen neuen Sensorwert zu erhalten. Tatsächlich ist es selbst bei solchen Sensoreinheiten, für deren Sensorwerte prinzipiell eine hohe Messfrequenz gewünscht wird, in der Praxis trotzdem üblich, dass die Messfrequenz vergleichsweise niedrig angesetzt wird, da die in entsprechenden Sensorsystemen zur Verfügung stehende Energie begrenzt ist und die Wechselintervalle, sofern überhaupt ein Wechsel möglich ist, beziehungsweise die Lebensdauer möglichst maximiert werden sollen. Relevant ist somit für viele Fälle ein erfindungsgemäßer Fahrzeugreifen, wobei die Sensoreinheit dazu eingerichtet ist, den Sensorwert, bevorzugt die Beschleunigung und/oder den Reifendruck, in vorbestimmten Abständen zu messen, wobei die Messungen bevorzugt einen Abstand von 30 s oder weniger, bevorzugt 20 s oder weniger, besonders bevorzugt 10 s oder weniger, aufweisen.

Bei zu kleinen Messfrequenzen kann es jedoch sein, dass die als Trigger wirkende Schlagbelastung so zwischen zwei Messungen erfolgt, dass die Sensoreinheit den Schlag nicht oder nicht zuverlässig detektieren kann, beispielsweise weil der Sensorwert etwas vor und etwas nach dem Schlag detektiert wird. In besonders einfachen Ausgestaltungen lässt sich dieses Problem für eine Vielzahl an relevanten Sensoreinheiten besonders leicht lösen, indem die eingesetzten Arbeitskräfte angewiesen werden, an jedem Reifen häufiger eine Schlagbelastung auszuführen, bis das eingesetzte Erfassungsgerät das Identifikationssignal detektiert. Als bevorzugte Ausgestaltung schlagen die Erfinder jedoch vor, dass alternativ auch eine Empfangsfunktionalität des Sensorsystems dahingehend genutzt werden kann, dass, beispielsweise mit dem zum Auslesen verwendeten Erfassungssystem, ein spezifisches Signal ausgesandt wird, welches im Rahmen der vorliegenden Erfindung als Bereitschaftssignal bezeichnet wird. Dieses Bereitschaftssignal dient dem Zweck, die elektronische Sensoreinheit in einen Bereitschaftszustand zu versetzen, indem diese sozusagen weiß, dass zeitnah mit einer Schlagbelastung zu rechnen ist, infolge der das Identifikationssignal ausgesendet werden soll. Um dies zu befördern, kann dann für einen begrenzten Zeitraum die Messfrequenz erhöht werden, sodass das Risiko, eine mechanische Schlagbelastung bei der Messwerterfassung zu verpassen, im Wesentlichen ausgeschaltet werden kann. Bevorzugt ist zusätzlich oder alternativ ein erfindungsgemäßer Fahrzeugreifen, wobei die elektronische Steuerungseinheit dazu eingerichtet ist, in Folge des Empfangs eines Bereitschaftssignals mit der elektronischen Kommunikationseinheit die elektronische Sensoreinheit für eine vorgegebene Zeitspanne in einen Bereitschaftsmodus zu versetzen, bevorzugt für 15 s oder mehr, besonders bevorzugt für 30 s oder mehr, ganz besonders bevorzug 60 s oder mehr, wobei die elektronische Sensoreinheit im Bereitschaftsmodus kontinuierlich oder mit einer oder mit einer gegenüber der ursprünglichen Messfrequenz erhöhten Frequenz, bevorzugt von 1 Hz oder mehr, besonders bevorzugt 2 Hz oder mehr, ganz besonders bevorzugt 5 Hz oder mehr, den Sensorwert, insbesondere die Beschleunigung und/oder den Reifendruck, bestimmt.

Die Erfindung betrifft zudem ein Verfahren zur Erfassung eines Reifensensorsignals des Sensorsystems eines erfindungsgemäßen Fahrzeugreifens, umfassend die Verfahrensschritte:
a) Ausüben einer mechanischen Schlagbelastung auf den Fahrzeugreifen,
b) Registrieren der mechanischen Schlagbelastung mit der Sensoreinheit,
c) Senden eines Identifikationssignals in einem drahtlosen Übertragungsverfahren mit der elektronischen Kommunikationseinheit in Folge der registrierten mechanischen Schlagbelastung,
d) Empfangen des Identifikationssignals mit einer elektronischen Empfangseinheit einer, bevorzugt mobilen, elektronischen Erfassungsvorrichtung.

Bevorzugt erfolgt das erfindungsgemäße Verfahren im Rahmen eines "teach in", so dass ein erfindungsgemäßes Verfahren bevorzugt ist, wobei das Verfahren zusätzlich den folgenden Verfahrensschritt umfasst:
e) Verknüpfen des Fahrzeugreifens mit dem Identifikationssignal in einem Reifenüberwachungssystem, bevorzugt einem fahrzeugübergreifenden Reifenüberwachungssystem, insbesondere einem Fahrzeugflottenmanagementsystem, zur Zuordnung des Fahrzeugreifens bzw. des Sensorsystems zu einem Fahrzeug, bevorzugt zu einem Fahrzeug und der Achse des Fahrzeugs, insbesondere zu einem Fahrzeug und einer Radposition auf den Achsen des Fahrzeugs. Bevorzugt ist Dabei ein erfindungsgemäßes Verfahren, wobei die Zuordnung auf einer elektronischen Speichereinheit gespeichert wird, wobei die elektronischen Speichereinheit bevorzugt Bestandteil eines elektronischen Steuergerätes oder ein Cloud-Speicher ist, besonders bevorzugt Bestandteil eines elektronischen Steuergerätes.

Bevorzugt ist grundsätzlich ein erfindungsgemäßes Verfahren, wobei der Fahrzeugreifen an einem Fahrzeug angeordnet ist. Bevorzugt ist zusätzlich oder alternativ ein erfindungsgemäßes Verfahren, wobei das Fahrzeug eine Vielzahl an erfindungsgemäßen Fahrzeugreifen umfasst. Bevorzugt ist zusätzlich oder alternativ auch ein erfindungsgemäßes Verfahren, wobei das Fahrzeug zumindest vier erfindungsgemäße Fahrzeugreife umfasst, die als Zwillingsbereifung auf einer einzelnen Achse angeordnet sind, da sich die Vorteile des erfindungsgemäßen Verfahren in diesen Fällen besonders deutlich zeigen.

Bevorzugt ist prinzipiell ein erfindungsgemäßes Verfahren, wobei das Verfahren sequentiell für eine Vielzahl von erfindungsgemäßen Fahrzeugreifen, bevorzugt für sämtliche am Fahrzeug angeordneten erfindungsgemäßen Fahrzeugreifen, durchgeführt wird. Bevorzugt ist zusätzlich oder alternativ ein erfindungsgemäßes Verfahren, wobei die mechanische Schlagbelastung mit einem stumpfen Schlagwerkzeug ausgeübt wird, bevorzugt einem Hammer oder Schläger, besonders bevorzugt einem Hammer.

Bevorzugt ist in Analogie zu den vorstehenden Ausführungen ein erfindungsgemäßes Verfahren, wobei das Verfahren durchgeführt wird, wenn der Absolutwert des detektierten Sensorwertes, bevorzugt der detektierten Beschleunigung, unterhalb eines vorgegebenen Höchstwertes liegt, und/oder wobei das Verfahren durchgeführt wird, wenn der von der Sensoreinheit detektierte Sensorwert, bevorzugt die Beschleunigung, unterhalb eines vorgegebenen Höchstwertes liegt, und/oder wobei die elektronische Steuerungseinheit dazu eingerichtet ist, das Identifikationssignal nur zu senden, wenn die Radialbeschleunigung und/oder die Drehzahl des Fahrzeugreifens unterhalb eines vorbestimmten Höchstwertes liegt, wobei die elektronische Steuerungseinheit bevorzugt dazu eingerichtet ist, das Identifikationssignal nur zu senden, wenn die der Fahrzeugreifen nicht rotiert.

Bevorzugt ist insbesondere beim Einsatz von Sensoreinheiten mit einer niedrigen Messfrequenz zusätzlich oder alternativ ein erfindungsgemäßes Verfahren, wobei die mechanische Schlagbelastung an jedem Fahrzeugreifen mehrmals ausgeübt wird, bevorzugt mit einer Frequenz, die größer ist als die Messfrequenz der elektronischen Sensoreinheit. Besonders bevorzugt ist jedoch zusätzlich oder alternativ ein erfindungsgemäßes Verfahren, wobei das Verfahren vor oder während Verfahrensschritt a) zusätzlich den folgenden Verfahrensschritt umfasst:
a0) Aussenden eines Bereitschaftssignals mit einer elektronischen Sendeeinheit, bevorzugt mit der elektronischen Sendeeinheit der mobilen elektronischen Erfassungsvorrichtung, und Empfangen des Bereitschaftssignals mit der elektronischen Kommunikationseinheit, wobei die elektronische Sensoreinheit für eine vorgegebene Zeitspanne in einen Bereitschaftsmodus versetzt wird, bevorzugt für 15 s oder mehr, besonders bevorzugt für 30 s oder mehr, ganz besonders bevorzugt für 60 s oder mehr, wobei die elektronische Sensoreinheit im Bereitschaftsmodus kontinuierlich oder mit einer gegenüber der ursprünglichen Messfrequenz erhöhten Frequenz, bevorzugt von 1 Hz oder mehr, besonders bevorzugt von 2 Hz oder mehr, ganz besonders bevorzugt von 5 Hz oder mehr, den Sensorwert, insbesondere die Beschleunigung und/oder den Reifendruck, bestimmt.

Im Zuge der Entwicklung der Erfindung haben die Erfinder eine besonders vorteilhafte Erfassungsvorrichtung konzipiert, mit welcher eine besonders vorteilhafte Verfahrensführung möglich ist. Diese Erfassungsvorrichtung ist als Schlagwerkzeug ausgeführt, beispielsweise als Hammer oder Knüppel und integriert somit die zur Erfassung der von den Fahrzeugreifen ausgesendeten Signale und für deren Verarbeitung benötigten elektronischen Vorrichtungen in einem Gerät, welches auch zur Ausübung der mechanischen Schlagbelastung verwendet werden kann. Neben dem vorteilhaften Umstand, dass die im Verfahren eingesetzten Arbeitskräfte damit in einer einzelnen Vorrichtung sämtliche Mittel zur Hand haben, die zur Durchführung des erfindungsgemäßen Verfahrens mit erfindungsgemäßen Fahrzeugreifen benötigt werden, hat sich in den Experimenten der Erfinder insbesondere als vorteilhaft erwiesen, dass die außerhalb des Reifens zum Empfangen des Identifikationssignals benötigten elektronischen Einrichtungen in dieser Weise beim Ausführen des Schlages automatisch in unmittelbare Nähe des zu identifizierenden Fahrzeugreifens gebracht werden, wodurch eine zusätzliche Steigerung der Signalqualität am Empfänger und eine noch sicherere Zuordnung möglich wird, beispielsweise wenn der Empfänger in den Hammerkopf der entsprechend ausgeführten mobilen elektronischen Erfassungsvorrichtung integriert wird. Bevorzugt ist somit zunächst ein erfindungsgemäßes Verfahren, wobei die mechanische Schlagbelastung mit der elektronischen Erfassungsvorrichtung, bevorzugt mit der nachfolgend im Rahmen der Erfindung offenbarten elektronischen Erfassungsvorrichtung ausgeübt wird. Bevorzugt ist zusätzlich oder alternativ ein erfindungsgemäßes Verfahren, wobei die mechanische Schlagbelastung mit der mobilen elektronischen Erfassungsvorrichtung ausgeübt wird, wobei die mobile elektronische Erfassungsvorrichtung die elektronische Empfangseinheit zum Empfangen von Signalen in dem drahtlosen Übertragungsverfahren und eine elektronische Datenverarbeitungseinheit zur Verarbeitung des empfangenen Signals umfasst, wobei die elektronische Erfassungsvorrichtung als stumpfes Schlagwerkzeug ausgeführt ist.

Offenbart wird entsprechend im Rahmen der Erfindung auch eine mobile elektronischen Erfassungsvorrichtung, für den Einsatz in einem erfindungsgemäßen Verfahren, umfassend eine elektronische Empfangseinheit zum Empfangen von Signalen in einem drahtlosen Übertragungsverfahren und eine elektronische Datenverarbeitungseinheit zur Verarbeitung des empfangenen Signals, wobei die elektronische Erfassungsvorrichtung als stumpfes Schlagwerkzeug ausgeführt ist.

Bevorzugt ist eine derartige Erfassungsvorrichtung, wobei die elektronische Erfassungsvorrichtung als Hammer oder Schläger ausgeführt ist, bevorzugt als Hammer. Bevorzugt ist zusätzlich oder alternativ eine derartige Erfassungsvorrichtung, wobei die elektronische Empfangseinheit bevorzugt im Hammerkopf vorgesehen ist.

Bevorzugt ist zusätzlich oder alternativ eine derartige Erfassungsvorrichtung, wobei die elektronische Erfassungsvorrichtung eine elektronische Sendeeinrichtung zum Senden eines Bereitschaftssignals in einem drahtlosen Datenübertragungsverfahren umfasst.

Bevorzugt ist zusätzlich oder alternativ eine derartige Erfassungsvorrichtung, wobei die elektronische Erfassungsvorrichtung dazu eingerichtet ist, von der elektronischen Empfangseinheit empfangene Signale an ein Reifenüberwachungssystem, bevorzugt eine fahrzeugübergreifendes Reifenüberwachungssystem zu übermitteln, bevorzugt mittels eines Funkverfahrens.

Nachfolgend werden die Erfindung und bevorzugte Ausführungsformen der Erfindung unter Bezugnahme auf die beiliegende Figur näher erläutert und beschrieben. Dabei zeigt:

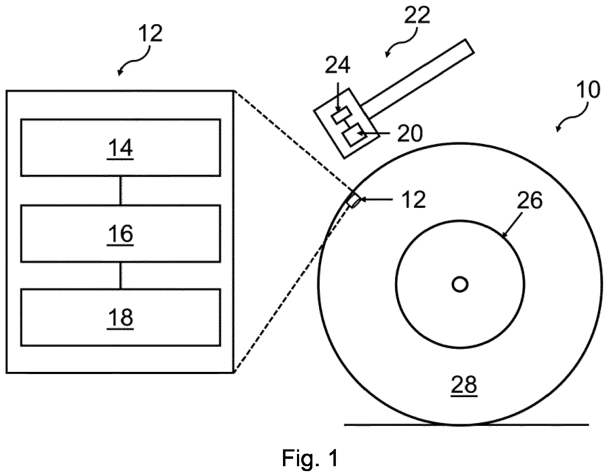

- Fig. 1: eine schematische Darstellung des erfindungsgemäßen Verfahrens an einem erfindungsgemäßen Fahrzeugreifen in einer bevorzugten Ausführungsform.

Fig. 1 visualisiert schematisch die Durchführung des erfindungsgemäßen Verfahrens an einem erfindungsgemäßen Fahrzeugreifen 10. Der Fahrzeugreifen 10 ist auf eine Felge 26 aufgezogen, sodass in seinem Inneren ein Reifeninnenraum 28 ausgebildet wird. An der Reifeninnenschicht des Fahrzeugreifens 10 ist ein in den Reifeninnenraum 28 weisendes Sensorsystem 12 angeordnet, welches die elektronische Sensoreinheit 14, die elektronische Kommunikationseinheit 16 und die elektronische Steuereinheit 18 als integrierte Bestandteile umfasst. Oberhalb des Fahrzeugreifens 10 ist eine bevorzugte elektronische Erfassungsvorrichtung 22 gezeigt, welche als Hammer ausgeführt ist, in dessen Hammerkopf die elektronische Empfangseinheit 20 und die zur Auswertung der empfangenen Signale verwendete elektronische Datenverarbeitungseinheit 24 integriert sind.

In dem erfindungsgemäßen Verfahren wird mit der elektronischen Erfassungsvorrichtung 22 durch einen kräftigen Schlag eine mechanische Schlagbelastung auf dem Fahrzeugreifen 10 ausgeübt, welcher beispielsweise ein Fahrzeugreifen 10 auf einer zwillingsbereiften Achse eines Lkws sein kann. Das Sensorsystem 12 umfasst im gezeigten Beispiel als elektronische Sensoreinheit 14 einen Beschleunigungssensor, über den der Schlag mit der elektronischen Erfassungsvorrichtung 22 als diskretes, sehr kurzes Signal in der vom Sensorsystem 12 erfahrenen Beschleunigung registriert werden kann. Die elektronische Steuerungseinheit 18 ist dazu eingerichtet, infolge des von der elektronischen Sensoreinheit 14 detektierten Schlages über die elektronische Kommunikationseinheit 16 ein Identifikationssignal auszusenden. Das ausgesendete Signal ist im gezeigten Beispiel der Fig. 1 dabei ein hochfrequentes Funksignal, welches von der elektronischen Empfangseinheit 20 der elektronischen Erfassungsvorrichtung 22 anschließend detektiert werden kann, um beispielsweise die - zumindest im Rahmen des relevanten Flottenmanagementsystems - einzigartige Identifikation auszulesen.

Über diese Identifikation sind der Fahrzeugreifen 10 und dessen Sensorsystem 12 nunmehr eindeutig einer bestimmten Reifenposition zuordenbar, was beispielsweise in einem elektronischen Flottenmanagementsystem entsprechend hinterlegt werden kann, wobei es in vorteilhafter Weise möglich ist, die elektronische Erfassungsvorrichtung 22 so auszulegen, dass die notwendige Aktualisierung des Flottenmanagementsystems unmittelbar über die elektronische Erfassungsvorrichtung 22 erfolgen kann, wenn diese beispielsweise ein im Griff verbautes Display beziehungsweise ein geeignetes Eingabefeld umfasst.

Im gezeigten Beispiel der Fig. 1 ist die Steuerungseinheit 18 dazu eingerichtet, das Identifikationssignal nur dann zu senden, wenn der Beschleunigungssensor ausgehend von den gemessenen Sensorwerten erkennen kann, dass das Fahrzeug im Wesentlichen steht, um eine energie-zehrende Aussendung während der Fahrt in Folge von bspw. Straßenunebenheiten zu vermeiden.

In einer besonders bevorzugten Ausgestaltung kann die elektronische Erfassungsvorrichtung 22 auch noch mit einer Sendefunktionalität ausgeführt werden, durch die die im Verfahren eingesetzten Arbeitskräfte mittels der elektronischen Erfassungsvorrichtung 22 ein Bereitschaftssignal aussenden können, mit dem in der Nähe befindliche Fahrzeugreifen 10 in einen Bereitschaftsmodus versetzt werden, indem sie für die Durchführung des erfindungsgemäßen Verfahrens besonders geeignet sind, indem nämlich die Messfrequenz, mit der die elektronischen Sensoreinheiten 14 die Sensorwerte detektieren, erhöht wird, um die mechanische Schlagbelastung sicher zu detektieren.

### Bezugszeichenliste

- 10: Fahrzeugreifen
- 12: Sensorsystem
- 14: elektronische Sensoreinheit
- 16: elektronische Kommunikationseinheit
- 18: elektronische Steuerungseinheit
- 20: elektronischen Empfangseinheit
- 22: elektronischen Erfassungsvorrichtung
- 24: elektronische Datenverarbeitungseinheit
- 26: Felge
- 28: Reifeninnenraum

## Patentansprüche

1. Fahrzeugreifen (10) mit einem Sensorsystem (12), wobei das Sensorsystem (12) umfasst:
i) eine elektronische Sensoreinheit (14) zur Detektion einer vom Fahrzeugreifen (10) erfahrenen mechanischen Schlagbelastung,
ii) eine elektronische Kommunikationseinheit (16), zum Senden von Signalen in einem drahtlosen Übertragungsverfahren, und
iii) eine elektronische Steuerungseinheit (18) zur Steuerung des Sensorsystems (12),
wobei die elektronische Steuerungseinheit (18) dazu eingerichtet ist mit der elektronischen Kommunikationseinheit (16) ein Identifikationssignal zu senden, wenn die Sensoreinheit (14) eine mechanische Schlagbelastung registriert, welche der Fahrzeugreifen (10) erfährt.

2. Fahrzeugreifen (10) nach Anspruch 1, wobei die Sensoreinheit (14) eine Sensoreinheit (14) zur Detektion einer vom Fahrzeugreifen (10) erfahrenen mechanischen Schlagbelastung über einen von der Sensoreinheit (14) detektierten Sensorwert ist, wobei der Sensorwert ausgewählt ist aus der Gruppe bestehend aus Vibrationen des Fahrzeugreifens (10), Deformation des Fahrzeugreifen (10), Geräuschen im Inneren des Fahrzeugreifens (10), Reifendruck im Inneren des Fahrzeugreifens (10) und der von der Sensoreinheit (14) erfahrenen Beschleunigung.

3. Fahrzeugreifen (10) nach einem der Ansprüche 1 oder 2, wobei die Sensoreinheit (14) eine Sensoreinheit (14) zur Detektion der Beschleunigung oder des Reifendrucks ist.

4. Fahrzeugreifen (10) nach einem der Ansprüche 1 bis 3, wobei die Sensoreinheit (14) die mechanische Schlagbelastung dadurch registriert, dass der detektierte Sensorwert ein oder mehrere vorgegebene Kriterien erfüllt.

5. Fahrzeugreifen (10) nach einem der Ansprüche 1 bis 4, wobei das drahtlose Übertragungsverfahren ein Funkverfahren ist.

6. Verfahren zur Erfassung eines Reifensensorsignals des Sensorsystems (12) eines Fahrzeugreifens (10) nach einem der Ansprüche 1 bis 5, umfassend die Verfahrensschritte:
a) Ausüben einer mechanischen Schlagbelastung auf den Fahrzeugreifen (10),
b) Registrieren der mechanischen Schlagbelastung mit der Sensoreinheit (14),
c) Senden eines Identifikationssignals in einem drahtlosen Übertragungsverfahren mit der elektronischen Kommunikationseinheit (16) in Folge der registrierten mechanischen Schlagbelastung,
d) Empfangen des Identifikationssignals mit einer elektronischen Empfangseinheit (20) einer elektronischen Erfassungsvorrichtung (22).

7. Verfahren nach Anspruch 6, wobei die elektronische Steuerungseinheit (18) dazu eingerichtet ist, das Identifikationssignal nur zu senden, wenn die Radialbeschleunigung und/oder die Drehzahl des Fahrzeugreifens (10) unterhalb eines vorbestimmten Höchstwertes liegt.

8. Verfahren nach einem der Ansprüche 6 oder 7, wobei die mechanische Schlagbelastung mit der elektronischen Erfassungsvorrichtung (22) ausgeübt wird, wobei die elektronische Erfassungsvorrichtung (22) die elektronische Empfangseinheit (20) zum Empfangen von Signalen in dem drahtlosen Übertragungsverfahren und eine elektronische Datenverarbeitungseinheit (24) zur Verarbeitung des empfangenen Signals umfasst, wobei die elektronische Erfassungsvorrichtung (22) als stumpfes Schlagwerkzeug ausgeführt ist.

9. Verfahren nach einem der Ansprüche 6 bis 8, wobei das Verfahren vor oder während Verfahrensschritt a) zusätzlich den folgenden Verfahrensschritt umfasst:
a0) Aussenden eines Bereitschaftssignals mit einer elektronischen Sendeeinheit und Empfangen des Bereitschaftssignals mit der elektronischen Kommunikationseinheit (16), wobei die elektronische Sensoreinheit (14) für eine vorgegebene Zeitspanne in einen Bereitschaftsmodus versetzt wird, wobei die elektronische Sensoreinheit (14) im Bereitschaftsmodus kontinuierlich oder mit einer gegenüber der ursprünglichen Messfrequenz erhöhten Frequenz den Sensorwert bestimmt.

10. Verfahren nach einem der Ansprüche 6 bis 9, wobei das Verfahren zusätzlich den folgenden Verfahrensschritt umfasst:
e) Verknüpfen des Fahrzeugreifens (10) mit dem Identifikationssignal in einem Reifenüberwachungssystem zur Zuordnung des Fahrzeugreifens (10) bzw. des Sensorsystems (12) zu einem Fahrzeug.
